Europäisches Patentamt

European Patent Office

Office européen des brevets

(11) Publication number: **0 093 811**
**B1**

## EUROPEAN PATENT SPECIFICATION

(45) Date of publication of patent specification: **05.03.86**

(51) Int. Cl.⁴: **B 23 K 9/30**

(21) Application number: **82302354.4**

(22) Date of filing: **07.05.82**

(54) Automatic arc-welding method.

(43) Date of publication of application:
**16.11.83 Bulletin 83/46**

(45) Publication of the grant of the patent:
**05.03.86 Bulletin 86/10**

(84) Designated Contracting States:
**DE FR GB SE**

(56) References cited:
**DE-A-2 737 055**
**FR-A-2 223 126**
**GB-A-2 000 864**
**GB-A-2 090 434**
**US-A-4 316 075**

(73) Proprietor: **NIPPON KOKAN KABUSHIKI KAISHA**
**1-2 Marunouchi 1-chome Chiyoda-ku**
**Tokyo 100 (JP)**

(72) Inventor: **Nomura, Hirokazu**
**6-224-62, Kamihamacho**
**Tsu-City Mie Pref. (JP)**
Inventor: **Sugitani, Yuji**
**251-11, Toriicho**
**Tsu-City Mie Pref. (JP)**
Inventor: **Suzuki, Yasuo**
**372-180, Nomuracho**
**Hisai-City Mie Pref. (JP)**

(74) Representative: **Wood, Anthony Charles et al**
**c/o MICHAEL BURNSIDE & PARTNERS 2**
**Serjeants' Inn Fleet Street**
**London EC4Y 1HL (GB)**

Courier Press, Leamington Spa, England.

## Description

This invention relates to automatic arc-welding methods which comprise reciprocally moving a welding torch, following the face of a groove formed between the objects to be welded, in the width direction of said groove, and, at the same time, continuously moving said torch in the longitudinal direction of said groove, to automatically weld said objects together in the longitudinal direction of said groove. Such methods are known, using consumable and non-consumable welding electrodes.

Our Japanese Patent Provisional Publication No. 19,445/79 dated February 14, 1979 disclosed an arc-welding method which comprises detecting the position of the welding electrode in a groove by means of arc current or arc voltage of an arc produced between the welding electrode and the groove, and welding the objects of welding together while controlling the position of the welding electrode on the basis of the result of detection, as summarized as follows:

The method of that prior art comprises: continuously moving a carriage along the longitudinal direction of a groove formed between the objects to be welded, fitting a welding torch to said carriage so that said torch is directed substantially vertically to said groove, said torch moving together with said carriage; directing a welding electrode through said torch toward said groove; feeding a welding current to said electrode to produce an arc between the tip of said electrode and said groove to weld said objects together by means of the arc heat along said groove; continuously moving said torch, during travel of said carriage, in the width direction of said groove while continuing welding; continuously detecting a value $(E_v)$ of arc voltage (or) art current of said arc; continuously calculating a deviation $(E_o-E_v)$ of the thus detected value $(E_v)$ from a previously set value $(E_o)$ of arc voltage (or) arc current; continuously moving said torch vertically up and down, during travel of said carriage, so that said deviation $(E_o-E_v)$ becomes null, thereby tending to maintain the distance between the tip of said electrode and said groove at a prescribed distance (I) during the movement of said torch in the width direction of said groove; continuously detecting a vertical position of said torch as a value of voltage $(e_v)$ indicated by a potentiometer for each movement of said torch in the width direction of said groove; reversing the direction of movement of said torch in the width direction of said groove at the moment when said value of voltage $(e_Y)$ thus detected agrees with a prescribed value of voltage (actually a previously set value of voltage $(e_H)$ in that prior art); repeating said movement of said torch in the width direction of said groove, said movement of said torch in the vertical direction and said reversal of the direction of the movement of said torch in the width direction of said groove; and also continuously moving said torch in the longitudinal direction of said groove, while continuing welding, together with said carriage; thereby reciprocally moving said torch in the width direction of said groove following the face of said groove while maintaining the distance between the tip of said electrode and said groove at said prescribed distance (I), and, at the same time, moving said torch in the longitudinal direction of said groove so as to weld said objects in the longitudinal direction of said groove.

According to the prior art presented above, since it is possible to detect the position of the welding electrode in a groove by means of arc current or arc voltage and carry out welding while moving the welding torch reciprocally in the width direction of the groove, thus permitting welding, accurately following the welding line.

However, the above-mentioned prior art was found to involve the following problems. Even if the objects to be welded have flat surfaces, rails for travelling the carriage on which a welding machine is mounted, laid in parallel with the longitudinal direction of the groove on one of the objects to be welded may sometimes curve up or down relative to the objects, or even if the rails are laid straight, the objects to be welded may sometimes curve up or down. According to the prior art, reversal in the reciprocating motion of the welding torch in the width direction of the groove is effected at the moment when the detected value of voltage representing the position of the welding electrode agree with a certain value of voltage indicating the reversing position of the torch which has previousely been set on the assumption that the distance between said carriage and the objects to be welded is kept at a previously set distance. Therefore, when the distance between said carriage and the objects to be welded deviates from the previously set distance under the effect of curved rails or curved objects as mentioned above, the moving direction of the torch is reversed at a point other than a previously set position of reversal. This results in a formed bead becoming irregular in height, a defective penetration and production of welding defects, thus making it impossible to obtain a sound weld.

In published patent document FR—A—2223126 the direction of movement of a welding torch in the width direction of the groove between two objects to be welded is reversed at the moment when a prescribed period of time has elapsed after the welding torch has passed across the centre of the groove in the width direction thereof, in response to a reversing signal from a centre position detector or a limit switch.

The above method has two difficulties. Firstly it is not possible to reverse the direction of movement of the torch in the width direction of the groove at a desired position unless the centre position detector or the limit switch is precisely located at a position corresponding to the centre in the width direction of the groove.

Secondly, even if the centre position detector or the limit switch is precisely located at the position corresponding to the centre in the width direction of the groove, it is not possible to reverse the direction of movement of the torch in the width direction of the groove at the desired position if the groove angle of the objects to be welded varies along the length of the groove.

An object of the present invention is therefore to provide an automatic arc-welding method which makes it possible, when automatically welding objects in the longitudinal direction of a groove by reciprocally moving in the width direction of the groove a welding torch directed substantially vertically to the groove formed between the objects following the face of said groove, and at the same time, moving said torch in the longitudinal direction of said objects to automatically conduct reversal of the moving direction of the torch in the width direction of the groove at a previously set constant position even if the distance between a carriage mounting a welding machine thereon and the objects to be welded deviates from a previously set distance, thus permitting formation of a bead having a uniform height.

The present invention characterizes said prior art by:

continuously calculating, for each movement of said torch in the width direction of said groove, said prescribed value of voltage as the value of the sum $(e_H+e_V)$ of said previously set value of voltage $(e_H)$ for the purpose of reversing the direction of movement of said torch in the width direction of said groove, and a value of voltage $(e_V)$ corresponding to a deviation $(\Delta L)$ of the distance between said carriage and said objects of welding from a previously set distance (L); and,

reversing the direction of movement of said torch in the width direction of said groove at the moment when said continuously detected value of voltage $(e_Y)$ of said vertical position of said torch as the value of voltage indicated by said potentiometer agrees with said calculated prescribed value of sum $(e_H+e_V)$.

Figure 1 is a descriptive view illustrating the principle of the present invention; and,

Figure 2 is a block diagram illustrating an embodiment of the present invention.

With a view to solving the above-mentioned problems in arc-welding we carried out extensive studies. As a result, we found that, by continuously detecting, as a value of voltage, the deviation of the distance between a carriage on which a welding machine is mounted and the objects to be welded from a previously set distance, calculating the sum of said value of voltage and a value of voltage previously set for reversing the moving direction of a torch in the width direction of a groove, and reversing the moving direction of the torch in the width direction of the groove at the moment when the value of voltage of the torch continuously detected agreed with said calculated sum of values of voltage, it is possible to form a bead having always a uniform height even if the distance between said carriage and the objects of welding varies.

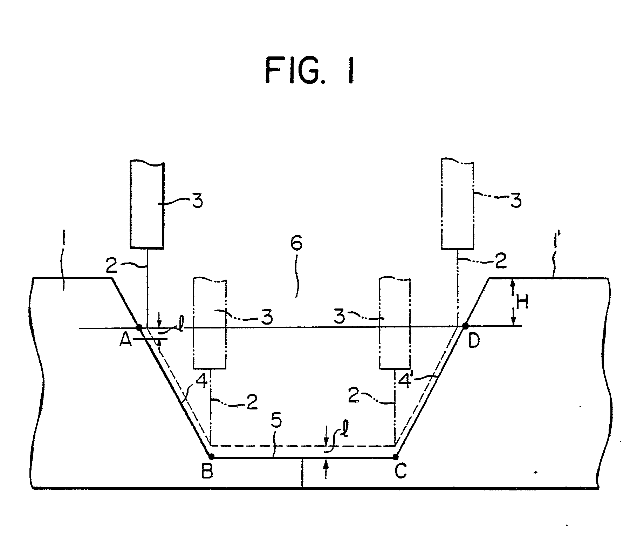

In Figure 1, 1 and 1' are objects to be welded; 6 is a groove which comprises inclined opposite faces 4 and 4' opening upward and a bottom face 5, and is formed between the objects 1 and 1'; 2 is a welding electrode inserted substantially vertically into the groove 6; 3 is a welding torch for inserting the welding electrode 2, said welding electrode 2 may be a consumable electrode, i.e., a wire fed at a constant rate or may be a non-consumable electrode. An arc is produced between the tip of the welding electrode 2 and the groove 6 to weld the objects of welding 1 and 1' together by means of the arc heat. The welding position of the groove 6 is shielded from the open air by a shielding gas ejected from the tip of the torch 3 or ejected from a nozzle (not shown) separately provided.

The torch 3 goes down, as shown by the two-point chain line in Fig. 1, from point A on the inclined face 4 on one side along the inclined face 4 to point B on the bottom face 5, then moves along the bottom face 5 to point C, and then rises along the inclined face 4' on the other side to point D. During this movement of the torch 3 following the face of the groove 6 between the objects of welding 1 and 1', the torch 3 is vertically moved up and down so as maintain the arc voltage or the arc current of the arc produced between the tip of the welding electrode 2 and the groove 6 always at a constant value, thereby maintaining the distance between the tip of the welding electrode 2 and the groove 6 at a prescribed distance. The vertical position of the torch 3 moving vertically up and down relative to the groove 6 is continuously detected as a value of voltage for each movement of the torch in the width direction of the groove 6. When said detected value of voltage agrees with the value of voltage produced at the moment when the welding electrode 2 rises to a point at a prescribed distance (H) from the top of the groove 6, that is, the value of voltage indicating the position of the tip of the welding electrode 2 at points A and D in Fig. 1, the direction of movement of the torch 3 in the width direction of the groove 6 is reversed.

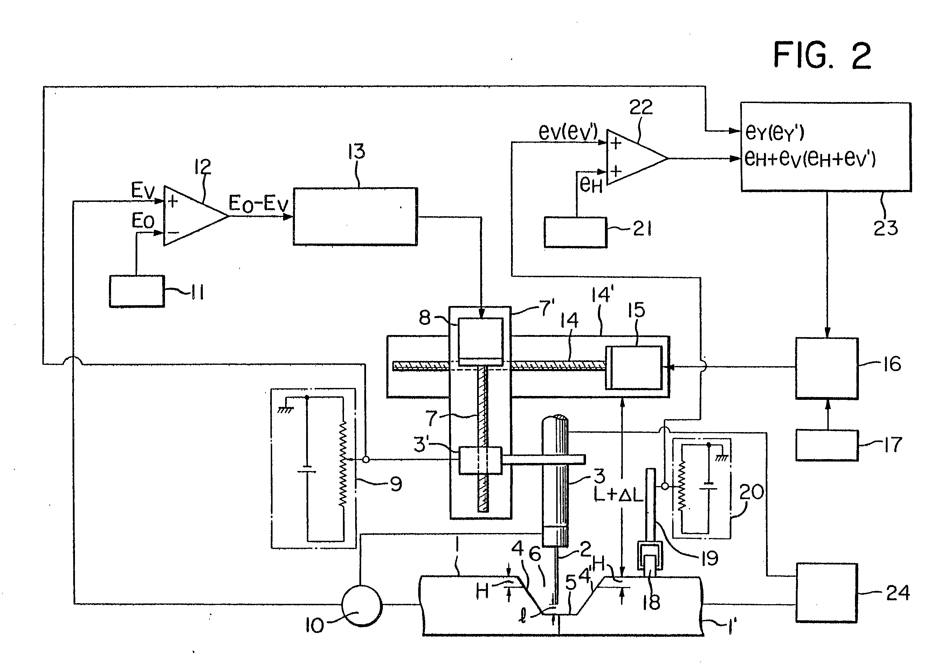

Fig. 2 is a block diagram illustrating an embodiment of the present invention, which represents a case in which the torch 3 is vertically moved up and down so as to maintain the arc voltage of the arc produced between the tip of the welding electrode 2 and the groove 6 always at a constant value. In Fig. 2, the torch 3 having therethrough the welding electrode 2 inserted substantially vertically into the groove 6 formed between the objects of welding 1 and 1' is moved in the longitudinal direction of the groove 6 by a carriage (not shown) travelling on rails (not shown) installed on one of the objects of welding 1 and 1' in parallel with the longitudinal direction of the groove 6.

In Fig. 2, 7 is a vertical screw stock for moving the torch 3 vertically up and down; 7' is a fitting of the vertical screw stock 7; 8 is a lifting motor, provided on the top of the fitting 7', for rotating the vertical screw stock 7 to move the torch 3 vertically up and down; and a support member 3' for supporting the torch 3 threadably engages with the vertical screw stock 7. Also in this figure, 14 is a horizontal screw stock for horizontally moving the torch 3; 14' is a fitting of the horizontal screw stock 14, the fitting 14' being fixed to said carriage; 15 is a horizontal movement motor, provided at one end of the fitting 14', for rotating the horizontal screw stock 14 to horizontally move the torch 3; and the fitting 7', to which the vertical screw stock 7 is fitted, engages threadably with the horizontal screw stock 14. Therefore, the torch 3 is moved vertically up and down while being moved in the width direction of the groove 6 by the drives of the lifting motor 8 and the horizontal movement motor 15.

Also in Fig. 2, 10 is an arc voltage detector connected between the torch 3 and one of the objects of welding 1; 11 is an arc voltage standard setter; 12 is a differential amplifier for calculating the deviation of the value of arc voltage detected by the arc voltage detector 10 from a value of arc voltage previously set by the arc voltage standard setter 11 and for amplifying this deviation to a certain level to issue a deviation signal to a lifting motor controller described below; and 13 is the lifting motor controller which controls driving of the lifting motor 8 and reversal of the driving direction thereof on the basis of the deviation signal issued by the differential amplifier 12. The value of arc voltage detected by the arc voltage detector 10 is compared by the differential amplifier 12 with the value of arc voltage previously set by the arc voltage standard setter 11. The differential amplifier 12 calculates the deviation of the detected value of arc voltage from the previously set value of arc voltage and feeds the lifting motor controller 13 with this deviation signal, whereby the lifting motor controller 13 drives the lifting motor 8 so as to bring said deviation signal to null. Thus, the torch 3 moving in the width direction of the groove 6 is controlled so that the distance between the tip of the welding electrode 2 and the groove 6 is maintained always at a prescribed distance.

In the same figure, 9 is a potentiometer continuously issuing a signal of the vertical position of the torch 3 moving vertically up and down relative to the groove 6 as a value of voltage; 16 is a horizontal movement motor controller for driving the horizontal movement motor 15 and reversing the rotating direction thereof by a pulse sent from a comparator described later; and 17 is a driving speed setter for setting rotating speed of the horizontal movement motor 15.

Further, 18 is a roller follower vertically movably fitted to the carriage through a spring or other suitable means so as to be always in contact with the surface of the object of welding 1'; 19 is a support stock supporting the roller follower 18; and, 20 is a potentiometer for continuously issuing a signal of the distance of vertical movement of the roller follower 18 as a value of voltage. The value of voltage issued by the potentiometer 20 is null when the distance between the carriage and the object of welding 1' is equal to the previously set value, i.e., when the rails or the object of welding 1' have no vertical curvature, whereas it is higher according as said distance becomes longer, and is lower according as said distance becomes shorter. That is, the potentiometer 20 continuously issues a signal of the deviation of the distance between the carriage and the object of welding 1' from the previously set distance as a value of voltage. The value of voltage issued by the potentiometer 20 is equal to the value of voltage issued by the potentiometer 9 when the torch 3 is vertically moved up and down in response to variations in the distance between the carriage and the object welding 1'. In the same figure, 21 is a setter which issues a signal of the value of voltage corresponding to a previously set depth from the top of the groove 6 to a differential amplifier described later for reversing the direction of movement of the torch 3 in the width direction of the groove 6. Said value of voltage varies for each welding pass when applying the multi-layer welding to the groove 6, since the reversing depth of the torch 3 varies for each welding pass. A differential amplifier 22 calculates a sum of said value of voltage received from the setter 21 and a value of voltage corresponding to a deviation of a distance between the carriage and the object of welding 1' detected by the potentiometer 20 from the previously set distance, and amplifies the value of the above sum to a certain level; 23 is a comparator which issues to the horizontal movement motor controller 16 a reversing signal which reverses the moving direction of the torch 3 in the width direction of the groove 6 at the moment when the value of voltage continuously issued by the potentiometer 9 agrees with the value of voltage calculated by said differential amplifier 22; and, 24 is a DC constant-current electric power source for welding connected between the object of welding 1' and the torch 3.

For each movement of the torch 3 in the width direction of the groove 6, the vertical position of the torch 3 is continuously detected by the potentiometer 9 as a value of voltage $(e_Y)$. This detected value of voltage $(e_Y)$ is sent to the comparator 23. The potentiometer 9 is arranged so that a higher value of voltage is produced according as the torch 3 goes down toward the bottom face 5 of the groove 6. By this arrangement, the value of voltage $(e_Y)$, which becomes higher according as the torch 3 goes down along the inclined face 4 on one side toward the bottom face 5 in the groove 6 and becomes lower according as the torch 3 goes up from the bottom face 5 along the inclined face 4' on the other side in this groove 6, is sent from the potentiometer 9 to the comparator 23.

On the other hand, a signal of the value of voltage $(e_v)$ corresponding to the deviation of the distance between the carriage and the object of welding 1' from the previously set distance is continuously issued by the potentiometer 20 to the differential amplifier 22. The differential amplifier 22 calculates the sum of the value of voltage ($e_H$) which is previously set by the setter 21 and the value of voltage ($e_V$) which is corresponding to the deviation of the distance between the carriage and the object of welding 1' from the previously set distance, and issues this calculated sum of the value of voltage ($e_H + e_V$) to the comparator 23 as a signal of the value of voltage indicating the reversing position of the torch 3.

The comparator 23 compares, for each movement of said torch 3, the value of voltage ($e_Y$) indicating the vertical position of the torch 3 detected continously by the potentiometer 9 with the value of voltage ($e_H + e_V$) indicating the reversing position of the direction of movement of said torch 3 to issue a movement reversing signal of the torch 3 to the horizontal movement motor controller 16 when said value of voltage ($e_Y$) agrees with said value of voltage ($e_H + e_V$). The horizontal movement motor controller 16 reverses the rotation of the horizontal movement motor 15 by means of said reversing signal of the direction of movement. As a result, the rotating direction of the horizontal screw stock 14 is reversed, thus resulting in the reversal of the direction of movement of the torch 3 in the width direction of the groove 6 through the action of the fitting 7' engaging threadably with the horizontal screw stock 14.

The above-mentioned movements of the torch 3 in the width and the vertical directions of the groove 6 and the reversal of the direction of movement of the torch 3 in the width direction of the groove 6 are repeated, thereby reciprocally moving the tip of the welding electrode 2 in the width direction of the groove 6, following the face of the groove 6, while maintaining the distance between the tip of the welding electrode 2 and the groove 6 always at a prescribed distance, and at the same time, moving the welding electrode 2 in the longitudinal direction of the groove 6, thus to weld the objects of welding 1 and 1' together in the longitudinal direction of the groove 6. Multi-layer welding is thus applied in the groove 6 by repeating the steps as mentioned above, and welding of the objects of welding 1 and 1' is completed.

Now, the present invention is described with reference to Figs. 1 and 2 for an example in which, the travelling rails for the welding machine carriage laid in parallel with the groove 6 on the object of welding 1' partially curves upward relative to the object of welding 1' although the object of welding 1' has a flat face.

When the distance between said carriage travelling on said rails and the object of welding 1' is equal to the previously set distance, the value of voltage ($e_V$) of a signal issued by the potentiometer 20 to the differential amplifier 22 is null. Therefore, a signal of the value of voltage ($e_H$) previously set by the setter 21 is issued as it is to the comparator 23 as a signal of the value of voltage indicating the reversing position of the torch 3. When the value of voltage ($e_Y$) of the signal issued by the potentiometer 9 and indicating the position of the torch 3 agrees with said value of voltage of the signal indicating the reversing position of the torch 3, a reversing signal is issued by the comparator 23 to the horizontal movement motor controller 16, resulting in the reversal of the moving direction of the torch 3.

On the other hand, when said carriage comes to the point on the rails curving upward relative to the object welding 1', the distance between said carriage and the object of welding 1' becomes longer than the previously set distance (L). As a result, a signal of a value of voltage ($e_{V'}$) corresponding to the deviation ($\Delta L$) of the distance between said carriage and the object of welding from said distance (L) is issued by the potentiometer 20 to the differential amplifier 22. This value of voltage ($e_{V'}$) is higher than said value of voltage ($e_V$), i.e., 0 V. The differential amplifier 22 calculates the sum of said value of voltage ($e_{V'}$) and the value of voltage ($e_H$) previously set by the setter 21, and this calculated sum of the value of voltage ($e_H + e_{V'}$) is issued to the comparator 23 as a signal of the value of voltage indicating the reversing position of the torch 3. When the value of voltage ($e_{Y'}$) of the signal issued by the potentiometer 9 and indicating the vertical position of the torch 3 agrees with said sum of the value of voltage ($e_H + e_{V'}$), a reversing signal is issued by the comparator 23 to the horizontal movement motor controller 16. As a result, in spite of the change in the distance between the carriage and the object of welding 1', the torch 3 moves along the groove 6 in the longitudinal direction thereof while accurately reversing the moving direction at the previously set reversing position. Thus, a bead of a uniform height is formed in the groove 6, enabling to satisfactorily weld the objects of welding 1 and 1'.

In the above example, the torch 3 rises by said distance ($\Delta L$) together with the carriage, whereas, as mentioned above, the electrode 2 is controlled so that the distance between the tip of the electrode 2 and the groove 6 is always kept at a prescribed distance (l). In other words, the torch 3 descends by said distance ($\Delta L$). As a result, the value of voltage ($e_{Y'}$) of the signal issued by the potentiometer 9 and indicating the vertical position of the torch 3 is higher than said value of voltage ($e_Y$). The value of voltage representing the difference between said value of voltage ($e_{Y'}$) and said value of voltage ($e_Y$) is equal to said value of voltage ($e_{V'}$) of the signal issued by the potentiometer 20.

The above-mentioned example has covered a case in which the rails for travelling the carriage partly curve upward relative to the object of welding 1'. However, when said rails partly curve downward relative to the object of welding 1', or when, although said rails are laid straight on the object of welding 1', the object of welding 1' curves upward or downward, the torch 3 accurately reverses its moving direction at the previously set reversing position as in the case of the abovementioned example.

Also in the above-mentioned example, the distance between the tip of the welding electrode 2 and the groove 6 has been maintained at a certain distance by detecting the arc voltage with the use of a constant-current electric power source and controlling the vertical position of the torch 3 so as to keep this arc voltage always at a prescribed value. This may also be accomplished by detecting the arc current with the use of a constant-voltage electric power source in place of the arc voltage, and controlling the vertical position of the torch 3 so as to keep this arc current always at a prescribed value.

According to the automatic arc-welding method of the present invention as described above, when reciprocally moving a welding torch directed substantially vertically toward a groove formed between objects of welding, following the face of said groove, in the width direction of the groove, and, at the same time, moving said torch in the longitudinal direction of said groove to automatically arc-weld the objects of welding together in the longitudinal direction of said groove, it is possible to accurately reverse the direction of movement of the reciprocating torch in the width direction of the groove automatically at a previously set distance from the top of the groove, even if the distance between the carriage fitted with the torch and the objects of welding varies. It is therefore possible to form a bead always with a constant height in the groove therein, resulting in a satisfactory penetration and hence excellent weld without welding defects, thus providing industrially useful effects.

## Claims

1. An automatic arc-welding method, which comprises:

continuously moving a carriage along the longitudinal direction of a groove (6) formed between objects (1, 1¹) to be welded; fitting a welding torch (3) to said carriage so that said torch (3) is directed substantially vertically to said groove (6), said torch (3) moving together with said carriage; directing a welding electrode (2) through said torch (3) toward said groove (6); feeding a welding current to said electrode (2) to produce an arc between the tip of the said electrode (2) and said groove (6) to weld said objects (1, 1¹) together by means of the arc heat along said groove (6); continuously moving said torch (3), during travel of said carriage, in the width direction of said groove (6), while continuing welding; continuously detecting a value ($E_v$) of arc voltage or arc current of said arc; continuously calculating a deviation ($E_o$–$E_v$) of the thus detected value ($E_v$) from a previously set value ($E_o$) of arc voltage or arc current; continuously moving said torch (3) vertically up and down during travel of said carriage so that said deviation ($E_o$–$E_v$) tends to zero, thereby tending to maintain the distance between the tip of said electrode (2) and said groove (6) at a prescribed distance (l) during the movement of said torch (3) in the width direction of said groove (6); continuously detecting a vertical position of said torch (3) as a value of voltage ($e_Y$) indicated by a potentiometer (9) for each movement of said torch (3) in the width direction of said groove (6); reversing the direction of movement of said torch (3) in the width direction of said groove (6) at the moment when said value of voltage ($e_Y$) thus detected agrees with a prescribed value of voltage; repeating said movement of said torch (3) in the width direction of said groove (6), said movement of said torch (3) in the vertical direction and said reversal of the direction of the movement of said torch (3) in the width direction of said groove (6); and also continuously moving said torch (3) in the longitudinal direction of said groove (6), while continuing welding, together with said carriage; thereby reciprocating said torch·(3) in the width direction of said groove (6) following the face of said groove (6) while maintaining the distance between the tip of said electrode and said groove at said prescribed distance (l), and, at the same time, moving torch (3), in the longitudinal direction of said groove (6) so as to weld said objects (1, 1¹) in the longitudinal direction of said groove (6);

characterized by:

continuously calculating, for each movement of said torch (3) in the width direction of said groove (6), said prescribed value of voltage as the value of the sum ($e_H$+$e_V$) of a value of voltage ($e_H$) previously set for the purpose of reversing the direction of movement of said torch (3) in the width direction of said groove (6) (known per se), and a value of voltage ($e_V$) corresponding to a deviation ($\Delta L$) of the distance between said carriage and said objects (1, 1¹) to be welded from a previously set distance (L);

wherein said reversing of the direction of movement of said torch (3) in the width direction of said groove (6) is effected at the moment when said continuously detected value of voltage ($e_Y$) of said vertical position of said torch (3) as the value of voltage indicated by said potentiometer (9) agrees with said calculated prescribed value of said sum ($e_H$+$e_V$).

2. A method as claimed in claim 1, wherein:

said value of voltage ($e_V$) corresponding to said deviation ($\Delta L$) of said distance between said carriage and said objects (1, 1¹) to be welded from said previously set distance (L) is continuously detected by a separate potentiometer (20).

## Revendications

1. Procédé de soudage automatique à l'arc, qui comprend:

le déplacement continu d'un chariot dans la direction longitudinale d'une gorge (6) formée entre des objets (1, 1') à souder, le montage d'un chalumeau de soudage (3) sur le chariot de manière que le chalumeau (3) ait une direction sensiblement verticale vers la gorge (6), le chalumeau (3) se déplaçant avec le chariot, la direction d'une électrode de soudage (2) dans le chalumeau (3) vers la gorge (6), la transmission d'un courant de soudage à l'électrode (2) afin qu'un arc soit formé entre le bout de l'électrode (2) et la gorge (6) et que les objets (1, 1') soient soudés par la chaleur de l'arc, le long de la gorge (6), le déplacement continu du chalumeau (3) pendant le déplacement du chariot, dans la direction de la largeur de la gorge (6) avec poursuite du soudage, la détection continue d'une valeur ($E_v$) d'une tension d'arc ou d'un courant d'arc, le calcul continu d'un écart ($E_o-E_v$) de la valeur ainsi détectée ($E_v$) par rapport à une valeur de consigne ($E_o$) de la tension de l'arc ou du courant de l'arc, le déplacement continu du chalumeau (3) en direction verticale pendant le déplacement du chariot de manière que l'écart ($E_o-E_v$) tende vers zéro, la distance comprise entre le bout de l'électrode (2) et la gorge (6) tendant ainsi à être maintenue à une distance prescrite (I) pendant le déplacement du chalumeau (3) dans la direction de la largeur de la gorge (6), la détection continue d'une position verticale du chalumeau (3) sous forme d'une valeur de la tension ($e_Y$) indiquée par un potentiomètre (9) pour chaque déplacement du chalumeau (3) dans la direction de la largeur de la gorge (6), l'inversion du sens de déplacement du chalumeau (3) dans la direction de la largeur de la gorge (6) au moment où la valeur de la tension ($e_Y$) ainsi détectée correspond à une valeur prescrite de la tension, la répétition du déplacement du chalumeau (3) dans la direction de la largeur de la gorge (6), du déplacement du chalumeau (3) dans la direction verticale et de l'inversion du sens de déplacement du chalumeau (3) dans la direction de la largeur de la gorge (6), et aussi le déplacement continu du chalumeau (3) dans la direction longitudinale de la gorge (6) avec poursuite du soudage, avec le chariot, si bien que le chalumeau (3) est déplacé alternativement dans la direction de la largeur de la gorge (6) en suivant la face de la gorge (6) avec maintien de la distance comprise entre le bout de l'électrode et la gorge à ladite distance prescrite (I), et, simultanément, déplacement du chalumeau (3) dans la direction longitudinale de la gorge (6) afin que les objets (1, 1') soient soudés dans la direction longitudinale de la gorge (6),

caractérisé par:

le calcul continu, pour chaque déplacement du chalumeau (3) dans la direction de la largeur de la gorge (6), de la valeur prescrite de la tension sous forme de la valeur de la somme ($e_H+e_V$) d'une valeur de tension ($e_H$) fixée préalablement pour l'inversion du sens de déplacement du chalumeau (3) dans le sens de la largeur de la gorge (6) (valeur connue) et d'une valeur de tension ($e_V$) correspondant à un écart (ΔL) de la distance comprise entre le chariot et les objets (1, 1') à souder par rapport à une distance de consigne (L),

et dans lequel l'inversion du sens de déplacement du chalumeau (3) dans la direction de la largeur de la gorge (6) est réalisée au moment où la valeur détectée de façon continue de la tension ($e_Y$) de la position verticale du chalumeau (3), sous forme de la valeur de la tension indiquée par le potentiomètre (9), correspond à la valeur prescrite calculée de la somme ($e_H+e_V$).

2. Procédé selon la revendication 1, dans lequel:

la valeur de tension ($e_V$) correspondant à l'écart (ΔL) de la distance entre le chariot et les objets (1, 1') à souder par rapport à la distance de consigne (L) est détectée constamment par un potentiomètre séparé (20).

**Patentansprüche**

1. Automatisches Lichtbogenschweißverfahren, bei dem ein Schlitten oder Wagen kontinuierlich in Längsrichtung einer zwischen zu schweißenden Objekten (1, $1^1$) ausgebildeten Rille oder Nut (6) geführt wird; am Wagen ein Elektrodenhalter (3) so angebracht wird, daß er im wesentlichen senkrecht zur Nut (6) gerichtet ist, wobei sich der Elektrodenhalter (3) mit dem Wagen mitbewegt; eine Schweißelektrode (2) durch den Elektrodenhalter (3) in Richtung auf die Rille (6) geführt wird; der Elektrode (2) ein Schweißstrom zugeführt wird, um einen Lichtbogen zwischen der Spitze der Elektrode (2) und der Nut (6) zu erzeugen und die Objekte (1, $1^1$) mittels der Lichtbogenhitze längs der Nut (6) zusammenzuschweißen; der Elektrodenhalter (3) während der Bewegung des Wagens unter Fortsetzung des Schweißens kontinuierlich in Breiten- oder Querrichtung der Nut (6) bewegt wird; eine Größe ($E_v$) der Lichtbogenspannung oder des Lichtbogenstroms des Lichtbogens kontinuierlich gemessen wird; eine Abweichung ($E_o-E_v$) der so gemessenen Größe ($E_v$) von einer vorgegebenen Sollgröße ($E_o$) der Lichtbogenspannung oder des Lichtbogenstroms kontinuierlich berechnet wird; der Elektrodenhalter (3) während der Bewegung des Wagens kontinuierlich aufwärts und abwärts bewegt wird, so daß die Abweichung ($E_o-E_v$) zu Null hin tendiert, um damit (möglichst) den Abstand zwischen der Spitze der Elektrode (2) und der Nut (6) während der Bewegung des Elektrodenhalters (3) in Querrichtung der Nut (6) auf einem vorgeschriebenen Abstand (I) zu halten; kontinuierlich eine lotrechte Stellung des Elektrodenhalters (3) asl Größe einer Spannung ($e_Y$), durch ein Potentiometer (9) angezeigt, für jede Bewegung des Elektrodenhalters (3) in Querrichtung zur Nut (6) ermittelt wird; die Richtung der Bewegung des Elektrodenhalters (3) in Querrichtung der Nut (6) in dem Augenblick umgekehrt wird, in welchem die so ermittelte Größe der Spannung ($e_Y$) mit einer vorgeschriebenen Spannungsgröße übereinstimmt; die Bewegung des Elektrodenhalters (3) in Querrichtung der Nut (6), die Bewegung des Elektrodenhalters (3) in lotrechter Richtung und die Umkehrung der Richtung der Bewegung des Elektrodenhalters (3) in Querrichtung der Nut (6) wiederholt (fortgesetzt) werden; und zudem der Elektrodenhalter (3) unter Fortsetzung des Schweißens zusammen mit dem Wagen kontinuierlich in Längsrichtung der Nut (6) bewegt wird, wobei der Elektrodenhalter (3), der Fläche der Nut (6) folgend, hin- und hergehend in Querrichtung der Nut (6) geführt wird, während der Abstand zwischen der Spitze der Elektrode oder der Nut auf dem vorgeschriebenen Abstand (1) gehalten wird, und gleichzeitig der Elektrodenhalter (3) in Längsrichtung der Nut (6) bewegt oder geführt wird, um die Objekte (1, 1¹) in Längsrichtung der Nut (6) zu schweißen,

dadurch gekennzeichnet, daß

für jede Bewegung des Elektrodenhalters (3) in Querrichtung der Nut (6) kontinuierlich die vorgeschriebene Größe der Spannung als Größe der Summe $(e_H+e_V)$ einer vorher vorgegebenen Größe der Spannung $(e_H)$ zum Zwecke der Umkehrung der Richtung der Bewegung des Elektrodenhalters (3) in Querrichtung der Nut (6) (an sich bekannt) und der Größe der Spannung $(e_V)$ entsprechend einer Abweichung ($\Delta L$) des Abstands zwischen dem Wagen und den zu schweißenden Objecten (1, 1¹) von einem vorgegebenen Sollabstand (L) berechnet wird,

wobei die Umkehrung der Richtung der Bewegung des Elektrodenhalters (3) in Querrichtung der Nut (6) in dem Augenblick erfolgt, in welchem die kontinuierlich ermittelte Größe der Spannung $(e_V)$ der lotrechten Stellung des Elektrodenhalters (3) als Größe der durch das Potentiometer (9) angezeigten Spannung mit der berechneten vorgeschriebenen Größe der Summe $(e_H+e_V)$ übereinstimmt.

2. Verfahren nach Anspruch 1, dadurch gekennzeichnet, daß die Größe der Spannung $(e_V)$ entsprechend der Abweichung ($\Delta L$) des Abstands zwischen dem Wagen und den zu schweißenden Objekten (1, 1¹) vom vorgegebenen Sollabstand (L) mittels eines getrennten Potentiometers (20) kontinuierlich gemessen oder ermittelt wird.

# FIG. I

# FIG. 2